# EUROPÄISCHE PATENTSCHRIFT

(11) **EP 1 431 323 B1**
(45) Veröffentlichungstag und Bekanntmachung des Hinweises auf die Patenterteilung: **20.02.2008**
(21) Anmeldenummer: 03026095.4
(22) Anmeldetag: 13.11.2003
(51) Int. Cl.: C08G 18/48, C08G 18/66, C08G 18/76, F16L 59/14

(54) **Isocyanataddukte**
Isocyanate adducts
Adduits d'isocyanate

(30) Priorität: 17.12.2002 DE 10259267
(43) Veröffentlichungstag der Anmeldung: 23.06.2004
(73) Patentinhaber: BASF Aktiengesellschaft, 67056 Ludwigshafen (DE)
(72) Erfinder: Heinz, Marion, 02994 Bernsdorf (DE); Rotermund, Udo Dr., 01990 Ortrand (DE); Huntemann, Peter, 49448 Stemshorn (DE); Schilling, Udo, 49356 Diepholz (DE)

(56) Entgegenhaltungen:
- EP-A- 0 803 523
- EP-A- 1 110 985
- DE-A- 10 116 757
- DE-A- 19 519 679
- DE-A- 19 730 466
- GB-A- 2 334 720

## Beschreibung

Gegenstand der Erfindung sind im wesentlichen kompakte Isocyanataddukte mit geringer Wärmeleitfähigkeit.

Kunststoffe, die durch Reaktion von Polyisocyanaten hergestellt werden, in folgenden als Isocyanataddukte bezeichnet, werden in vielen Bereichen der Technik eingesetzt. Zu den Isocyanataddukten gehören beispielsweise die Polyurethane, Polyisocyanurate und Polyharnstoffe.

Ein wesentliches Einsatzgebiet der Isocyanataddukte ist die Wärmedämmung, beispielsweise bei Kühlgeräten, Gebäuden oder Rohrleitungen. Für dieses Einsatzgebiet werden geschäumte Isocyanataddukte eingesetzt. Für bestimmte Anwendungen, beispielsweise die Rohrdämmung im Off-Shore-Bereich, werden im wesentlichen ungeschäumte Isocyanataddukte als Dämmaterial eingesetzt. Bei derartigen kompakten Materialien wird die Dämmwirkung durch die Kunststoffmatrix bewirkt.

Da die Dämmwirkung durch die Kunststoffmatrix in vielen Fällen nicht ausreichend ist werden zur Verbesserung der Dämmwirkung derartiger Materialien häufig Füllstoffe eingesetzt.

So beschreibt WO 96/28684 Kunststoffe, bei denen Barium-Sulfat als hoch dichtes Füllmaterial verwendet wird. Mit diesem Füllstoff kann jedoch keine niedrige Wärmeleitfähigkeit erreicht werden.

Gemäß DE 197 30 466 wird eine Matrix aus Isocyanuratgruppen enthaltenden-Isocyanataddukten verwendet, die mit einer Kennzahl um 1000 unter Verwendung von Alkaliacetat als Katalysator hergestellt werden. Die Matrix des so erhaltenen Produkts weist eine Wärmeleitfähigkeit von weit über 0,200 W/m*K auf. Auch durch eine hohe Konzentration an Mikrohohlglaskugeln im Produkt kann die Wärmeleitfähigkeit nur auf einen Wert um 0,140 W/mK gesenkt werden. Unter "Kennzahl" wird das Verhältnis der effektiv eingesetzten zur stöchiometrisch errechneten Isocyanatmenge verstanden.

In WO 99/03922 und US 6 387 447 wird die Beschichtung von.Rohren mit Polyurethanen sowohl nach dem Rotationsverfahren als auch nach dem klassischen Gießverfahren im Formenguss beschrieben. Die Anwendung dieser Rohre liegt im Off-Shore-Bereich. Beansprucht werden Beschichtungsmassen aus Polyurethan beziehungsweise Polyisocyanurat, gefüllt mit Mikrohohlkugeln, die eine Druckfestigkeit >10bar besitzen. Diese mit Mikrohohlkugeln gefüllten Isolierbeschichtungen sollen Wärmeleitzahlen < 0,180 W/m*K aufweisen. Der wärmeleitfähigkeitssenkende Einfluss durch die Mitverwendung von Mikrohohlkugeln ist bekannt und nachvollziehbar, da die Mikrohohlkugeln selbst eine niedrigere Wärmeleitfähigkeit als die Kunststoffmatrix besitzen und sich die Gesamtwärmeleitfähigkeit additiv aus der Wärmeleitfähigkeit der Kunststoffmatrix und der der Mikrohohlkugeln zusammensetzt.

In EP 636 467 wird ein Verfahren zur Herstellung von Off-Shore-Rohren beschrieben. Dabei wird das Polyurethan mit einer rotierenden Düse auf die Rohre aufgetragen. Zur Durchführung des Verfahrens ist eine gute Fließfähigkeit der Aufbaukomponenten erforderlich. Das zur Herstellung der Rohre beschriebene PolyurethanSystem verwendet als Isocyanat ein Prepolymer aus monomerem Diphenylmethandiisocyanat (MDI). Die Menge des in den beschriebenen Rezepturen eingesetzten Isocyanats ist mit etwa 55 Gew.-% sehr hoch. Derartige Rezepturen zeigen zumeist recht gute mechanische Eigenschaften, die Wärmeleitfähigkeit ist jedoch für viele Anwendungsfälle zu hoch.

Da zur Einstellung einer geringen Wärmeleitfähigkeit nur eine begrenzte Menge an Füllstoffen ohne negative Einflüsse für die mechanischen Eigenschaften in die Polyurethan eingearbeitet werden kann, sind für eine Senkung der Wärmeleitfähigkeit auf diesem Weg Grenzen gesetzt.

Aufgabe der Erfindung war es daher, Isocyanataddukte bereitzustellen, deren Kunststoffmatrix eine geringe Wärmeleitfähigkeit aufweist, ohne dass es zu Nachteilen bei der Verarbeitung oder den mechanischen Eigenschaften der Isocyanataddukte kommt.

Überraschenderweise wurde gefunden, dass eine Matrix aus Isocyanataddukten, insbesondere aus Polyurethan, mit einen kristallinem Anteil unter 10 J/g, gemessen mit Differential-Scanning Calorimetrie nach DIN 51 004 bei 20K/min; zwischen Raumtemperatur bis 250°C unter Verwendung von Stickstoff mit 31/h als Trägergas und einem Aromatengehalt, angegeben als Kohlenstoffatome in aromatischen Ringen, kleiner als 31 Gew.-%, eine niedrige Wärmeleitfähigkeit aufweist. Die Messungen wurden mit einem DSC-Gerät "DSC 7" von Perkin Elmer Instruments durchgeführt.

Gegenstand der Erfindung sind demnach Isocyanataddukte, herstellbar durch Umsetzung mindestens eines Polyisocyanats mit einer Funktionalität >2,0 und einem NCO-Gehalt zwischen 25 und 32 Gew.-% mit Verbindungen mit mindestens zwei mit Isocyanatgruppen reaktiven Wasserstoffatomen b), die mindestens ein Polyetherol bi) mit einer Funktionalität größer 3 und einer Molmasse größer 300, bevorzugt zwischen 300 und 1000 g/mol, mindestens ein Polyetherol bii) mit einer Molmasse größer 1000 g/mol und einer Funktionalität zwischen 1,7 und 3 enthalten, mit einem kristallinen Anteil von kleiner 10 J/g, bestimmt durch Differential-Scanning Calorimetrie nach DIN 51004 bei 20K/min; von Raumtemperatur bis 250°C unter Verwendung von Stickstoff mit 31/h als Trägergas zwischen Raumtemperatur und 250°C und einem Aromatengehalt, angegeben als Kohlenstoffatome in aromatischen Ringen, von , kleiner als 31 Gew.-%, bezogen auf das Gesamtgewicht der Isocyanataddukte.

Unter Polymermatrix versteht man das feste Polymermaterial, welches das Reaktionsprodukt von Polyolkomponente und Isocyanatkomponente abzüglich Füllstoffe und Hohlräume ist.

Der kristalline Anteil der Isocyanataddukte der ist bevorzugt < 7 J/g, besonders bevorzugt < 3 J/g, insbesondere nicht nachweisbar. Die Nachweisgrenze des angegebenen Verfahrens nach DIN 51004 liegt bei etwa 0,5 J/g.

Der Aromatengehalt liegt bevorzugt zwischen 5 Gew.-% und 31 Gew.-%, insbesondere zwischen 10 und 20 Gew.-%, jeweils bezogen auf die Polymermatrix.

Derartige Isocyanataddukte weisen auch ohne den Zusatz von Füllstoffen, wie Mikrohohlkugeln, insbesondere Mikrohohlglaskugeln, Wärmeleitfähigkeiten kleiner 0,20 W/m*K bevorzugt kleiner 0,19 W/m*K, besonders bevorzugt < 0,18 W/m*K, bei 23°C, bestimmt nach der Hitzdrahtmethode, publiziert von Ebert H.-P.et al. High Temp.-High Press, 1993, 25, 391-402, auf. Eine detaillierte Beschreibung dieser Methode findet sich weiter unten.

Die Herstellung dieser Isocyanataddukte kann in einer bevorzugten Ausführungsform der Erfindung erfolgen durch Umsetzung von
a) Isocyanaten mit einer Funktionalität >2,0 und einem NCO-Gehalt zwischen 25 und 32 Gew.-% mit
b) mindestens einer Verbindung mit mindestens zwei reaktiven Wasserstoffatomen in Gegenwart von
c) Katalysatoren
dadurch gekennzeichnet, dass die Verbindungen mit reaktiven Wasserstoffatomen b) mindestes ein Polyetherol bi) mit einer Funktionalität größer 3, besonders bevorzugt größer 4 und einer Molmasse größer 300, bevorzugt zwischen 300 und 1000 g/mol, besonders bevorzugt zwischen 300 und 700 g/mol, und mindestens ein Polyetherol bii) mit Molmasse größer 1000 g/mol, bevorzugt größer 2000 g/mol und einer Funktionalität zwischen 1,7 und 3 enthalten und die Umsetzung bei einer Kennzahl kleiner 200 durchgeführt wird. Es ist für eine niedrige Wärmeleitfähigkeit bevorzugt eine Kennzahl kleiner 130 zu wählen, besonders bevorzugt sind Kennzahlen kleiner 110, insbesondere solche unter 90.

Dabei verwendet man das Polyetherol bi) vorzugsweise in einer Menge zwischen 0,1 bis 80 Gewichts-Teilen, und das Polyetherol bii) vorzugsweise in einer Menge zwischen 0,1 bis 99,9 Gewichts-Teilen jeweils bezogen auf die Komponente b).

Zusätzlich zu den Polyetheralkoholen bi) und bii) kann die Komponente b) noch weitere Verbindungen mit mindestens zwei mit Isocyanatgruppen reaktiven Wasserstoffatomen enthalten.

So kann die Komponente b) zusätzlich mindestens ein Polyetherol biii) mit einer Molmasse kleiner 1000 g/mol und einer Funktionalität kleiner 2,5 enthalten. Der Polyetherol biii), sofern verwendet, kann in einer Menge von 0,1 bis 95 Gewichts-Teilen, bezogen auf die Komponente b), eingesetzt werden.

Die Polyetheralkohole werden nach üblichen und bekannten Verfahren durch Anlagerung von Alkylenoxiden an H-funktionelle Startsubstanzen hergestellt. Als Alkylenoxide werden hauptsächlich Ethylenoxid und/oder Propylenoxid einzeln oder in beliebigen Gemischen untereinander eingesetzt. Prinzipiell möglich ist auch der Einsatz von Butylenoxid oder anderen höheren Alkylenoxiden. Die Anlagerung der Alkylenoxide wird zumeist in Anwesenheit von Katalysatoren durchgeführt. Als Katalysatoren werden in der Technik zumeist basische Substanzen, insbesondere Alkalihydroxide, oder Multimetallcyanidverbindungen, auch als DMC-Katalysatoren bezeichnet, eingesetzt.

Zur Herstellung der Polyetheralkohole bi) können als Starter vorzugsweise Trimethylolpropan, Glycerin, Saccharose, Sorbit (Sorbitol), Sorbit (Sorbitol)/Propylenglykol, Saccharose/Glycerin/Wasser, Saccharose/Diethylenglykol, Saccharose/Glycerin, Saccharose/Penaterythrit/Diethylenglykol, Saccharose/Triethanolamin, Ethylendiamin, vicinales TDA, und weitere gebräuchliche hochfunktionelle Starter und/oder deren Gemische eingesetzt werden. Als Starter können auch Vorprodukte aus den genannten Startern und einem Alkylenoxid eingesetzt werden, die in einem separaten Verfahrensschritt hergestellt wurden.

Als Alkylenoxide kommen, wie oben beschrieben, zumeist Propylenoxid und/oder Ethylenoxid zum Einsatz. Die Alkylenoxide können einzeln oder in beliebigen Gemischen miteinander zum Einsatz kommen, wobei bei den Gemischen die Anlagerung der Alkylenoxide einzeln hintereinander oder als sogenannte statistische Mischung erfolgen kann.

Zur Herstellung der Polyetheralkohole bii) können als Starter vorzugsweise Propylenglykol, Ethylenglykol, Diethylenglykol, Glycerin, Glycerin/Wasser, Trimethylolpropan, Triethanolamin, Dipropylenglykol, Ricinusöl eingesetzt werden.

Als Alkylenoxide kommen auch hier zumeist Propylenoxid und Ethylenoxid zum Einsatz. Die Alkylenoxide können einzeln oder in beliebigen Gemischen miteinander zum Einsatz kommen, wobei bei den Gemischen die Anlagerung der Alkylenoxide einzeln hintereinoder als sogenannte statistische Mischung erfolgen kann.

Zur Herstellung der Polyetheralkohole biii) können als Starter vorzugsweise Propylenglykol und/oder Ethylenglykol verwendet werden. Als Alkylenoxide sind auch hier Propylenoxid und/oder Ethylenoxid bevorzugt.

Die Polyesterole biv) werden nach üblichen Verfahren durch Kondensation von mehrfunktionellen Carbonsäuren mit mehrfunktionellen Alkoholen hergestellt. Vorzugsweise eingesetzt werden Veresterungsprodukte aus Adipinsäure und Neopentylglykol; Adipinsäure und Propylenglykol; Adipinsäure und Diethylenglykol; Adipinsäure, Etylenglykol und Propylenglykol; Adipinsäure, Ethylenglykol und Diethylenglykol; Adipinsäure, Ethylenglykol und Butandiol-1,4; Adipinsäure, Diethylenglykol und Trimethylolpropan; Adipinsäure, Phthalsäureanhydrid, Propylenglykol und / Trimethylolpropan; Adipinsäure und Dipropylenglykol;Adipinsäure, Phthalsäureanhydrid, Ölsäure und Trimethylolpropan; Adipinsäure, Isophthalsäure und Hexandiol-1,6 sowie Phthalsäureanhydrid, Diethylenglykol und Ethylenglykol.

Die Kristallinität der Polyesterole biv), bestimmt mit DSC, sollte keinen Schmelzpeak bzw. eine Schmelzwärme bis höchstens 7J/g zeigen.

Für bestimmte Einsatzgebiete ist es vorteilhaft, dass die Komponente b) weiterhin mindestens einen Kettenverlängerer bv) enthält. Als Kettenverlängerer werden vorzugsweise difunktionelle Alkohole mit einem Molekulargewicht im Bereich zwischen 62 und 400 g/mol eingesetzt. Als besonders geeignet erweisen sich Dipropylenglykol, Propylenglykol, Neopentylglykol und andere Diole mit vorwiegend nicht endständigen OH-Gruppen, beispielsweise Pentandiol-1,2 Pentandiol-2,3.

Als mindestens difunktionelle Isocyanate a), werden besonders bevorzugt solche auf Basis von MDI mit einer Funktionalität von >2,0 eingesetzt. Beispiele sind Mischungen aus 4,4'-MDI mit einem Anteil Anteil an Isomeren und höherfunktionellen Oligomeren. Geeignet sind Isocyanate oder Prepolymere auf der Basis von Polymer-MDI, wie sie von der BASF AG unter der Bezeichnung Lupranat®M 10, Lupranat®M 20, Lupranat®M 50, Lupranat®M 70, Lupranat®M 200 vertrieben werden, oder deren Mischungen bzw. Prepolymere. Der NCO-Gehalt der mindestens difunktionellen Isocyanate a) liegt zwischen 25 und 32 Gew.-%. Die Funktionalität der Isocyanate a) ist> 2, vorzugsweise zwischen 2,1 bis 3,0.

Es können auch Oligomere auf Basis von MDI verwendet werden, wie sie von der BASF AG unter der Bezeichnung Lupranat® MM 103 vertrieben werden. Die eingesetzte Menge an Isocyanaten ergibt sich aus der Kennzahl bei der Umsetzung. Im allgemeinen sollte die Menge des eingesetzten Isocyanat kleiner 54 Gew.-%, bezogen auf das Gewicht des Isocyanataddukts, sein.

Als Katalysatoren können die üblichen und bekannten Urethan-Bildungskatalysatoren eingesetzt werden. Besonders bevorzugt werden für das erfindungsgemäße Verfahren tertiäre Amine, wie Tri-n-propylamin, Triethylamin, Triisopentylamin, Diethylbenzylamin, Dimethylcyclohexylamin oder Methylmorpholin, eingesetzt. Falls in den Isocyanataddukten auch Isocyanuratgruppen eingebaut werden sollen, werden übliche Trimerisierungskatalysatoren, wie Dabco^{®} TMR 3 (N-Hydroxyalkyl-quaternär-ammonium-carboxylat, Lupragen N 600 (1,3,5-Tris(3-dimethylaminopropyl)-hexahydro-s-triazin, Kaliumacetat, mit eingesetzt.

Falls erforderlich, kann die Wärmeleitfähigkeit der erfindungsgemäßen Isocyanataddukte durch Zusatz von Füllstoffen weiter erniedrigt werden. Bevorzugte Füllstoffe sind Mikrohohlkugeln. Beispiele hierfür sind Mikrohohlglaskugeln,beispielsweise Scotchlite^{™} GlassBubbles von 3 M, Mikrokunststoffhohlkugeln, beispielsweise Expancel^{®} von AKZO NOBEL oder keramische Mikrohohlkugeln, beispielsweise Cenospheres^{®} von Sphere Services INC.. Durch den Zusatz derartiger Füllstoffe kann die Wärmeleitfähigkeit der erfindungsgemäßen Isocyanataddukte bis auf Werte von kleiner 0,14 W/m*K gesenkt werden.

Falls erforderlich, können weitere übliche Hilfs- und/oder Zusatzstoffe, wie sie in der Polyurethanchemie üblich sind, mitverwendet werden.

Die erfindungsgemäßen Isocyanataddukte eignen sich besonders für den Einsatz als Rohrisolierungen im Off-Shore-Bereich, aber auch im Schiffsbau, für den Einsatz in Sandwich-Plate-Systemen und für die Anwendung im Bauwesen als Isolierstege für Türen und Fenster.

Zur Herstellung der erfindungsgemäßen Isocyanataddukte werden zunächst das Isocyanat a) und die Verbindungen mit mindestens zwei mit Isocyanatgruppen reaktiven Wasserstoffatomen b) miteinander vermischt. Dies kann manuell, vorzugsweise jedoch unter Verwendung der bekannten Mischaggregate, insbesondere Mischköpfe, geschehen. Es ist in der Praxis üblich, zu den Verbindungen mit mindestens zwei mit Isocyanatgruppen reaktiven Wasserstoffatomen b) die Katalysatoren c) sowie die gegebenenfalls mitverwendeten Füllstoffe und anderen Hilfs- und/oder Zusatzstoffe zuzusetzen. Diese Mischung wird zumeist als Polyolkomponente bezeichnet.

Das Aufbringen der Reaktionsmischung auf die zu beschichtenden Flächen erfolgt nach bekannten Verfahren. Beispiele hierfür sind das Rotationsgießverfahren, das Formgießverfahren und das Mischtopfverfahren.

Beim Rotationsgießverfahren wird mittels einer Filmdüse ein thixotropierendes Reaktionsgemisch auf ein sich axial drehendes Rohr aufgegossen, wobei über den Vorschub der Düse die gewünschte Beschichtungsdicke eingestellt wird.

Beim Formgießverfahren wird ein vorbehandelter Rohrabschnitt in eine mit Trennmittel behandelte temperierte Form eingelegt, die Form geschlossen, geneigt und an der tiefsten Stelle über einen Schlauch steigend gefüllt, bis das reagierende Polyurethangemisch an der höchsten Stelle aus der Form austritt.

Beim Mischtopfverfahren wird ein bereits reagierendes Polyurethansystem, welches durch eine PUR-Dosiermaschine vorgemischt ist, in einen am Boden offenen Mischtopf geleitet. Gleichzeitig wird mittels eines Schneckendosiergerätes eine definierte Menge an Mikrohohlkugeln eindosiert. Durch eine regulierbare Austrittsöffnung kann das Reaktionsgemisch auf ein rotierendes Rohr oder in eine Form gebracht werden.

Die in den Beispielen angeführten Wärmeleitfähigkeiten wurden nach der dynamischen Hitzdrahtmethode bestimmt. Dabei dient der in die Probe eingebettete Draht gleichzeitig als Heizelement und Temperatursensor. Während der Messung wird der Draht mit einer konstanten elektrischen Leistung beheizt. Die zeitliche Entwicklung der mittleren Temperatur des Hitzdrahtes lässt sich anhand des temperaturabhängigen Drahtwiderstandes erfassen. Dieser Temperaturverlauf hängt von der Wärmeleitfähigkeit der Probe ab. Die Wärmeleitfähigkeit der Probe wird durch Anpassung einer analytischen Lösung, publiziert von Ebert H.-P.et al. High Temp.-High Press, 1993, 25, 391-402, an diesen zeitabhängigen Temperaturverlauf unter Berücksichtigung des thermischen Kontaktwiderstandes zwischen Probe und Draht sowie von Wärmeverlusten in axialer Richtung ermittelt.

Die erfindungsgemäßen Isocyanataddukte sind im wesentlichen kompakt und weisen so geringe Wärmeleitfähigkeiten auf, daß sie prinzipiell auch ohne den Zusatz von Füllstoffen zur Wärmeisolierung eingesetzt werden können. Die Herstellung kann ohne Probleme auf üblichen Anlagen erfolgen.

Die Erfindung soll an den nachstehenden Beispielen näher erläutert werden.

### Vergleichsbeispiel 1:

### Komponente A

| | |
|---|---|
| 95,0 | Gewichtsteile Polyetheralkohol, OH-Zahl 490, hergestellt durch Polyaddition von 70 % Propylenoxid an Sorbitol |
| 5,0 | Gewichtsteile Zeolith-Paste |
| 0,7 | Gewichtsteile Dimethylcyclohexylamin |

### Komponente B

| | |
|---|---|
| 125 | Gewichtsteile Lupranat® MM 103 |
| Mischungsverhältnis A:B = 100: 124 | |
| Wärmeleitfähigkeit: 0,243 W/m*K | |

### Vergleichsbeispiel 2:

### Komponente A

| | |
|---|---|
| 95,0 | Gewichtsteile Polyetheralkohol, OH-Zahl 490, hergestellt durch Polyaddition von 66% Propylenoxid an Saccharose/ Glycerin |
| 5,0 | Gewichtsteile Zeolith-Paste |
| 0,7 | Gewichtsteile Dimethylcyclohexylamin |

### Komponente B

| | |
|---|---|
| 125 | Gewichtsteile Lupranat^{®} MM 103 |
| Mischungsverhältnis A:B = 100: 124 | |
| Wärmeleitfähigkeit: 0,256 W/m*K | |

### Vergleichsbeispiel 3:

### Komponente A

| | |
|---|---|
| 100,0 | Gewichtsteile Polyesteralkohol, Veresterungsprodukt aus Adipinsäure und Ethylenglykol, OH-Zahl 55, |
| 11,0 | Gewichtsteile Butandiol- 1,4 |
| 1,0 | Gewichtsteile Trimethylolpropan |
| 1,0 | Gewichtsteile Stabilisator |

### Komponente B

| | |
|---|---|
| 47,5 | Gewichtsteile Lupranat^{®} MES |
| Mischungsverhältnis A:B = 100: 42 | |
| Wärmeleitfähigkeit: 0,208 W/m*K | |
| Kristallinität: 15 J/g | |

### Vergleichsbeispiel 4:

### Komponente A

| | |
|---|---|
| 100,0 | Gewichtsteile Polyetheralkohol, Polytetrahydrofuran, OH-Zahl 56, |
| 11,0 | Gewichtsteile Butandiol- 1,4 |
| 1,0 | Gewichtsteile Trimethylolpropan |
| 1,0 | Gewichtsteile Stabilisator |

### Komponente B

| | |
|---|---|
| 47,5 | Gewichtsteile Lupranat® MES |
| Mischungsverhältnis A:B = 100: 42 | |
| Wärmeleitfähigkeit: 0,211 W/m*K | |
| Kristallinität: 13 J/g | |

### Beispiel 1

### Komponente A

| | |
|---|---|
| 43,9 | Gewichtsteile Polyetheralkohol, OH-Zahl 104, hergestellt durch Polyaddition von Propylenoxid an Propylenglykol |
| 27,5 | Gewichtsteile Polyetheralkohol, OH-Zahl 55, hergestellt durch Polyaddition von 86% Propylenoxid und 10 % Ethylenoxid an Glycerin |
| 18,0 | Gewichtsteile Dipropylenglykol |
| 5,0 | Gewichtsteile Polyetheralkohol, OH-Zahl 490, Polyaddition von 70% Propylenoxid an Sorbitol |
| 5,0 | Gewichtsteile Zeolith-Paste |
| 0,5 | Gewichtsteile DC-MSA Antifoam |
| 0,1 | Gew.-Teile Kaliumacetat |

### Komponente B

| Lupranat® M 20S | |
|---|---|
| Mischungsverhältnis A:B = 100: 60 | |
| Kennzahl 101 | |
| Wärmeleitfähigkeit: | 0,173.W/m*K |
| MDI-Gehalt: | 37,5% |
| Aromatengehalt: | 21,6% |
| Kristallinität: | nicht nachweisbar |

Durch Zugabe von 19 Gew.-% (in PUR) 3M - Scotchlite Glasbubbles^{®} Typ S 32 wurde eine Wärmeleitfähigkeit von ca. 0,135 W/m*K erreicht.

### Beispiel 2

### Komponente A

| | |
|---|---|
| 26,25 | Gewichtsteile Polyetheralkohol, OH-Zahl 104, hergestellt durch Polyaddition von Propylenoxid an Propylenglykol |
| 27,5 | Gewichtsteile Polyetheralkohol, OH-Zahl 55, hergestellt durch Polyaddition von 86 % Propylenoxid und 10 % Ethylenoxid an Glycerin |
| 14,7 | Gewichtsteile Dipropylenglykol |
| 5,0 | Gewichtsteile Polyetheralkohol, OH-Zahl 490, hergestellt durch Polyaddition von 70 % Propylenoxid an Sorbitol |
| 21,0 | Gewichtsteile Polyetheralkohol, OH-Zahl 28, hergestellt durch Polyaddition von 14 % Ethylenoxid und 84 % Propylenoxid an Glycerin |
| 5,0 | Gewichtsteile Zeolith-Paste |
| 0,5 | Gewichtsteile DC-MSA Antifoam |
| 0,05 | Gewichtsteile Kaliumacetat |

### Komponente B

| Lupranat^{®} M 20S | |
|---|---|
| Mischungsverhältnis A:B = 100: 50 | |
| Kennzahl 101 | |
| Wärmeleitfähigkeit: | 0,164 W/m*K |
| MDI-Gehalt: | 33,3% |
| Aromatengehalt: | 19,2 Gew.-% |
| Kristallinität: | nicht nachweisbar |

### Beispiel 3

### Komponente A

| | |
|---|---|
| 79,10 | Gewichtsteile Polyetheralkohol, OH-Zahl 35, hergestellt durch Polyaddition von 84% Propylenoxid und 13 % Ethylenoxid an Glycerin |
| 15,90 | Gewichtsteile Polyetheralkohol, OH-Zahl 490, hergestellt durch Polyaddition von 70% Propylenoxid an Sorbitol |
| 5,0 | Gewichtsteile Zeolith-Paste |
| 0,7 | Gewichtsteile Dimethylcyclohexylamin |

### Komponente B

### Lupranat M 20 W

| | |
|---|---|
| Mischungsverhältnis A:B = 100: 26,5 | |
| Kennzahl 105 | |
| Wärmeleitfähigkeit: | 0,179 W/m*K |
| MDI-Gehalt: | 20,9% |
| Aromatengehalt: | 12,0 Gew.-% |
| Kristallinität: | nicht nachweisbar |

### Beispiel 4

### Komponente A

| | |
|---|---|
| 81,40 | Gewichtsteile Polyetheralkohol, OH-Zahl 35, hergestellt durch Polyaddition von 84 % Propylenoxid und 13 % Ethylenoxid an Glycerin |
| 12,60 | Gewichtsteile Polyetheralkohol, OH-Zahl 490, hergestellt durch Polyaddition von 66 % Propylenoxid an Saccharose/Glycerin |
| 1,00 | Gewichtsteile Propylenglykol |
| 5,0 | Gewichtsteile Zeolith-Paste |
| 0,5 | Gewichtsteile Dimethylcyclohexylamin |

### Komponente B

### Lupranat^{®} M 10 W

| | |
|---|---|
| Mischungsverhältnis A:B = 100: 26,1 | |
| Kennzahl 105 | |
| Wärmeleitfähigkeit: | 0,171 W/m*K |
| MDI-Gehalt: | 20,7% |
| Aromatengehalt: | 11,9 Gew.-% |
| Kristallinität: | nicht nachweisbar |

### Beispiel 5:

### Komponente A

| | |
|---|---|
| 74,00 | Gewichtsteile Polyetheralkohol, OH-Zahl 35, hergestellt durch Polyaddition von 84% Propylenoxid und 13 % Ethylenoxid an Glycerin |
| 5,00 | Gewichtsteile Polyetheralkohol, OHZ 490, hergestellt durch Polyaddition von 66% Propylenoxid an Saccharose/ Glycerin |
| 6,00 | Gewichtsteile Dipropylenglycol |
| 5,0 | Gewichtsteile Zeolith-Paste |
| 10,0 | Gewichtsteile 3M - Scotchlite Glass Bubbles K1 |
| 0,5 | Gewichtsteile Dimethylcyclohexylamin |

### Komponente B

### Lupranat® M 20W

| | |
|---|---|
| Mischungsverhältnis A:B = 100: 25,4 | |
| Kennzahl 105 | |
| Wärmeleitfähigkeit: | 0,110 W/m*K |
| MDI-Gehalt: | 20,3% |
| Aromatengehalt: | 11,7 Gew.-% |
| Kristallinität: | 5,5J/g |

### Beispiel 6

### Komponente A

| | |
|---|---|
| 81,40 | Gewichtsteile Polyetheralkohol, OH-Zahl 35, hergestellt durch Polyaddition von 84 % Propylenoxid und 13 % Ethylenoxid an Glycerin |
| 12,60 | Gewichtsteile Polyetheralkohol, OH-Zahl 490, hergestellt durch Polyaddition von 66 % Propylenoxid an Saccharose/ Glycerin |
| 1,00 | Gewichtsteile Propylenglykol |
| 5,0 | Gewichtsteile Zeolith-Paste |
| 0,5 | Gewichtsteile Dimethylcyclohexylamin |

### Komponente B

### Lupranat® M 20 W

| | |
|---|---|
| Mischungsverhältnis A:B = 100: 21,4 | |
| Kennzahl 85 | |
| Wärmeleitfähigkeit: | 0,162 W/m*K |
| MDI-Gehalt: | 16,9 % |
| Aromatengehalt: | 9,7 Gew.-% |
| Kristallinität: | nicht nachweisbar |

## Patentansprüche

1. Isocyanataddukte, mit einer Wärmeleitfähigkeit von kleiner 0,2 W/m*K, bestimmt nach der Hitzdraht Methode bei 23°C, herstellbar durch Umsetzung mindestens eines a) Polyisocyanats mit einer Funktionalität von >2,0 und einem NCO-Gehalt zwischen 25 und 32 Gew.-% mit Verbindungen mit mindestens zwei mit Isocyanatgruppen reaktiven Wasserstoffatomen b) die mindestes ein Polyetherol bi) mit einer Funktionalität größer 3 und einer Molmasse größer 300, bevorzugt zwischen 300 und 1000 g/mol, und mindestes ein Polyetherol bii) mit einer Molmasse größer 1000 g/mol und einer Funktionalität zwischen 1,7 und 3 enthalten, mit einem kristallinen Anteil von kleiner 10 J/g, bestimmt durch Differential-Scanning Calorimetrie nach DIN 51 004 bei 20 K/min von Raumtemperatur bis 250°C unter Verwendung von Stickstoff mit 3l/h als Trägergas und einem Aromatengehalt, angegeben als Kohlenstoffatome in aromatischen Ringen, von 5 bis 31 Gew.-%, bezogen auf das Gesamtgewicht der Isocyanataddukte.

2. Isocyanataddukte nach Anspruch 1, **dadurch gekennzeichnet, daß** sie eine Wärmeleitfähigkeit, bestimmt nach der Hitzdraht Methode bei 23°C, von kleiner 0,19 W/m*K, aufweisen.

3. Isocyanataddukte nach den Ansprüchen 1 und 2, **dadurch gekennzeichnet, dass** sie Füllstoffe enthalten.

4. Isocyanataddukte nach den Ansprüchen 1 bis 3 **dadurch gekennzeichnet, dass** die Füllstoffe Mikrohohlkugeln mit einer möglichen Druckbelastung von größer 10 bar sind.

5. Isocyanataddukte nach den Ansprüchen 1 bis 4 **dadurch gekennzeichnet, dass** die Füllstoffe Mikrohohlglaskugeln sind.

6. Isocyanataddukte nach den Ansprüchen 1 bis 5 **dadurch gekennzeichnet, dass** die Füllstoffe Mikrokunststoffhohlkugeln sind.

7. Isocyanataddukte nach den Ansprüchen 1 bis 6 **dadurch gekennzeichnet, dass** die Füllstoffe keramische Mikrohohlkugeln sind.

8. Verfahren zur Herstellung von Isocyanataddukten nach Anspruch 1 bis 7 durch Umsetzung von
a) Isocyanaten mit einer Funktionalität von >2,0 und einem NCO-Gehalt zwischen 25 und 32 Gew.-% mit
b) mindestens einer Verbindung mit mindestens zwei reaktiven Wasserstoffatomen in Gegenwart von
c) Katalysatoren
**dadurch gekennzeichnet, dass** die Verbindungen mit reaktiven Wasserstoffatomen b) mindestes ein Polyetherol bi) mit einer Funktionalität größer 3 und einer Molmasse größer 300, bevorzugt zwischen 300 und 1000 g/mol, und mindestes ein Polyetherol bii) mit einer Molmasse größer 1000 g/mol und einer Funktionalität zwischen 1,7 und 3 enthalten und die Umsetzung bei einer Kennzahl kleiner 200 durchgeführt wird.

9. Verfahren nach Anspruch 8, **dadurch gekennzeichnet, daß** als Isocyanat a) eine Mischung aus Diphenylmethandiisocyanat und Polyphenylen-polymethylen-polyisocyanaten eingesetzt wird.

10. Verfahren nach Anspruch 9 **dadurch gekennzeichnet, dass** das Isocyanat in einer Menge von kleiner 54 Gew.- %, bezogen auf das Gewicht aller Einsatzstoffe, eingesetzt wird.

11. Verfahren nach Anspruch 10, **dadurch gekennzeichnet, dass** die Komponente b) zusätzlich mindestens ein Polyetherol biii) mit einer Molmasse kleiner 1000 g/mol und einer Funktionalität kleiner 2,5 enthält.

12. Verfahren nach Anspruch 11, **dadurch gekennzeichnet, dass** die Komponente b) zusätzlich mindestens ein Polyesterol biv) enthält.

13. Verfahren nach Anspruch 12, **dadurch gekennzeichnet, dass** die Komponente b) weiterhin mindestens einen difunktionellen Kettenverlängerer bv) mit einem Molekulargewicht im Bereich zwischen 62 und 400 g/mol enthält.

14. Verfahren nach Ansprüchen 15, **dadurch gekennzeichnet dass** als Katalysatoren Aminkatalysatoren und/oder Trimerisierungskatalysatoren verwendet werden.

15. Verwendung von Isocyanataddukten nach Anspruch 1 bis 7 zur Isolierung von Rohren.

16. Verwendung von Isocyanataddukten nach Anspruch 1 bis 7 zur Herstellung von Sandwichelementen.

17. Verwendung von Isocyanataddukten nach Anspruch 1 bis 7 als Isolierstege für Türen und Fenster.

## Claims

1. An isocyanate adduct which has a thermal conductivity of less than 0.2 W/m*k, determined by the hot wire method at 23°C, and can be prepared by reacting at least one a) polyisocyanate having a functionality of > 2.0 and an NCO content from 25 to 32% by weight with compounds having at least two hydrogen atoms which are reactive toward isocyanate groups b) which comprise at least one polyetherol bi) having a functionality greater than 3 and a molar mass greater than 300 g/mol, preferably from 300 to 1000 g/mol, and at least one polyetherol bii) having a molar mass greater than 1000 g/mol and a functionality of from 1.7 to 3 and has a crystalline content of less than 10 J/g determined by differential scanning calorimetry in accordance with DIN 51 004 at 20 K/min from room temperature to 250°C using a nitrogen flow of 3 1/h as carrier gas and an aromatics content reported as carbon atoms in aromatic rings of from 5 to 31% by weight, based on the total weight of the isocyanate adduct.

2. The isocyanate adduct according to claim 1 which has a thermal conductivity determined by the hot wire method at 23°C of less than 0.19 W/m*K.

3. The isocyanate adduct according to claim 1 or 2 comprising fillers.

4. The isocyanate adduct according to any of claims 1 to 3, wherein the fillers are hollow microspheres having a possible pressure loading of greater than 10 bar.

5. The isocyanate adduct according to any of claims 1 to 4, wherein the fillers are hollow glass microspheres.

6. The isocyanate adduct according to any of claims 1 to 5, wherein the fillers are hollow polymer microspheres.

7. The isocyanate adduct according to any of claims 1 to 6, wherein the fillers are hollow ceramic microspheres.

8. A process for preparing isocyanate adducts according to any of claims 1 to 7 by reacting
a) isocyanates having a functionality of > 2.0 and an NCO content from 25 to 32% by weight with
b) at least one compound having at least two reactive hydrogen atoms in the presence of
c) catalysts,
wherein the compounds having reactive hydrogen atoms b) comprise at least one polyetherol bi) having a functionality greater than 3 and a molar mass greater than 300 g/mol, preferably from 300 to 1000 g/mol, and at least one polyetherol bii) having a molar mass greater than 1000 g/mol and a functionality of from 1.7 to 3 and the reaction is carried out at an index of less than 200.

9. The process according to claim 8, wherein the isocyanate a) used is a mixture of diphenylmethane diisocyanate and polyphenylenepolymethylene polyisocyanates.

10. The process according to claim 9, wherein the isocyanate is used in an amount of less than 54% by weight, based on the weight of all starting materials.

11. The process according to claim 10, wherein the component b) further comprises at least one polyetherol biii) having a molar mass of less than 1000 g/mol and a functionality of less than 2.5.

12. The process according to claim 11, wherein the component b) further comprises at least one polyesterol biv).

13. The process according to claim 12, wherein the component b) further comprises at least one bifunctional chain extender bv) having a molecular weight in the range from 62 to 400 g/mol.

14. The process according to claim 15, wherein the catalysts used are amine catalysts and/or trimerization catalysts.

15. The use of isocyanate adducts according to any of claims 1 to 7 for insulating pipes.

16. The use of isocyanate adducts according to any of claims 1 to 7 for producing sandwich elements.

17. The use of isocyanate adducts according to any of claims 1 to 7 as insulation around doors and windows.

## Revendications

1. Produits d'addition d'isocyanate ayant une conductibilité thermique inférieure à 0,2 W/m*k, déterminée selon la méthode du fil chaud à 23°C, qu'on fabrique par réaction d'au moins a) un polyisocyanate avec une fonctionnalité > 2,0 et une teneur en NCO située entre 25 et 32 % en poids avec des composés ayant au moins deux atomes d'hydrogène réactifs avec des groupes isocyanate, b) qui contiennent au moins un polyéthérol bi) avec une fonctionnalité supérieure à 3 et une masse molaire supérieure à 300, de préférence entre 300 et 1000 g/mole et au moins un polyéthérol bii) avec une masse molaire supérieure à 1000 g/mole et une fonctionnalité entre 1,7 et 3, avec une proportion cristalline inférieure à 10 J/g, déterminée par calorimétrie par analyse différentielle selon la norme DIN 51 004 à 20 K/min de la température ambiante à 250°C en utilisant de l'azote avec 31/h comme gaz porteur et une teneur en aromatiques, indiquée comme les atomes de carbone dans des cycles aromatiques, de 5 à 31 % en poids, sur base du poids total des produits d'addition d'isocyanate.

2. Produits d'addition d'isocyanate selon la revendication 1, **caractérisés en ce qu'**ils présentent une conductibilité thermique déterminée par la méthode du fil chaud à 23°C, inférieure à

3. Produits d'addition d'isocyanate selon les revendications 1 et 2, **caractérisés en ce qu'**ils contiennent des charges.

4. Produits d'addition d'isocyanate selon les revendications 1 à 3, **caractérisés en ce que** les charges sont des microbilles creuses ayant une charge de pression possible supérieure à 10 bars.

5. Produits d'addition d'isocyanate selon les revendications 1 à 4, **caractérisés en ce que** les charges sont des microbilles creuses de verre.

6. Produits d'addition d'isocyanate selon les revendications 1 à 5, **caractérisés en ce que** les charges sont des microbilles creuses de matière synthétique.

7. Produits d'addition d'isocyanate selon les revendications 1 à 6, **caractérisés en ce que** les charges sont des microbilles creuses céramiques.

8. Procédé de fabrication de produits d'addition d'isocyanate selon la revendication 1 à 7 par réaction:
a) d'isocyanates avec une fonctionnalité > 2,0 et une teneur en NCO entre 25 et 32 % en poids avec
b) au moins un composé ayant au moins deux atomes d'hydrogène réactifs en présence de
c) catalyseurs
**caractérisé en ce que** les composés ayant des atomes d'hydrogène réactifs b) contiennent au moins un polyéthérol bi) avec une fonctionnalité supérieure à 3 et une masse molaire supérieure à 300, de préférence entre 300 et 1000 g/mole et au moins un polyéthérol bii) avec une masse molaire supérieure à 1000 g/mole et une fonctionnalité entre 1,7 et 3 et la réaction se fait à un indice plus petit que 200.

9. Procédé selon la revendication 8, **caractérisé en ce qu'**on utilise comme isocyanate a) un mélange composé de diphénylméthanediisocyanate et de polyphénylène-polyméthylène-polyisocyanates.

10. Procédé selon la revendication 9, **caractérisé en ce que** l'isocyanate est employé dans une quantité inférieure à 54 % en poids, sur base du poids de toutes les substances utilisées.

11. Procédé selon la revendication 10, **caractérisé en ce que** le composant b) contient en plus au moins un polyéthérol biii) avec une masse molaire inférieure à 1000 g/mole et une fonctionnalité inférieure à 2,5.

12. Procédé selon la revendication 11, **caractérisé en ce que** le composant b) contient en plus au moins un polyestérol biv).

13. Procédé selon la revendication 12, **caractérisé en ce que** le composant b) contient encore au moins un agent élongateur de chaîne difonctionnel bv) d'un poids moléculaire dans la plage comprise entre 62 et 400 g/mole.

14. Procédé selon la revendication 15, **caractérisé en ce qu'**on utilise comme catalyseurs des catalyseurs d'amine et/ou des catalyseurs de trimérisation.

15. Utilisation de produits d'addition d'isocyanate selon la revendication 1 à 7 pour l'isolation de tuyaux.

16. Utilisation de produits d'addition d'isocyanate selon la revendication 1 à 7 pour la fabrication d'éléments sandwichs.

17. Utilisation de produits d'addition d'isocyanate selon la revendication 1 à 7 comme isolateurs pour portes et fenêtres.
